# EUROPEAN PATENT APPLICATION

(11) **EP 0 653 554 A1**
(43) Date of publication of application: **17.05.1995**
(21) Application number: 94117798.2
(22) Date of filing: 10.11.1994
(51) Int. Cl.: F01P 7/16

(54) **Thermostat for an automotive engine cooling system**

(30) Priority: 12.11.1993 JP 317248/93
(71) Applicant: Kuze, Yoshikazu, Tokyo (JP)
(72) Inventor: Kuze, Yoshikazu, Tokyo (JP)
(74) Representative: Grünecker, Kinkeldey, Stockmair & Schwanhäusser Anwaltssozietät

(57) **Abstract**

A cooling system for an automotive engine has a first passage (6) provided between an outlet (5) of a water jacket (4) of the engine and an inlet (12) of a radiator (11), a second passage (14) provided between an outlet (13) of the radiator (11) and an inlet (10) of the water jacket (4), and a bypass passage (7) provided between the first passage (6) and the second passage (14). A thermostat (1) is provided in a housing (8) for controlling coolant passing through the first and second passages (6,14). A flange (15) is provided for supporting the thermostat (1) in the housing (8) and for closing the second passage (14). The flange (15) has a hole (17) having a diameter between 1.8 mm and 2.8 mm.

## Description

### BACKGROUND OF THE INVENTION

The present invention relates to a thermostat for an automotive engine cooling system.

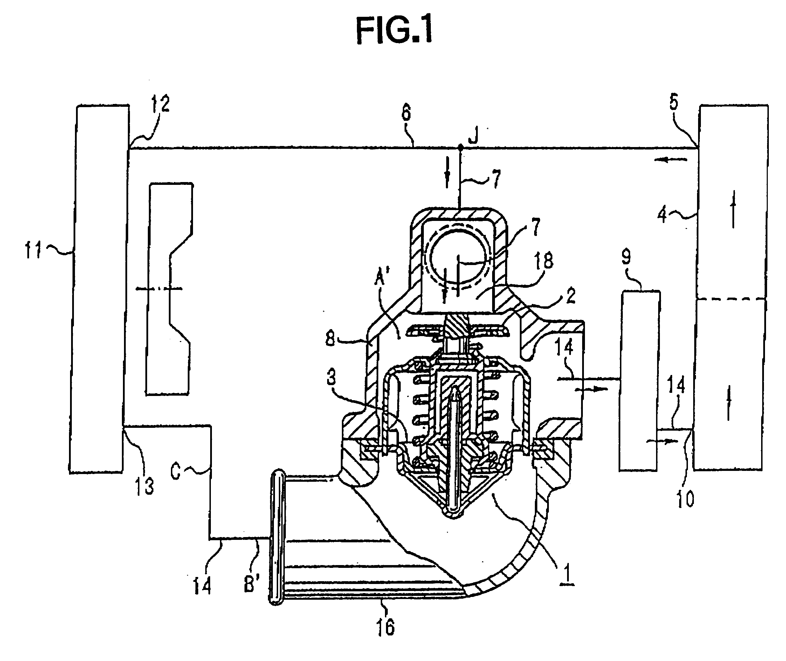

As shown in Fig. 1, a conventional cooling system for an automotive engine has a thermostat 1 which is disposed in an inlet side passage of water jackets 4.

The cooling system comprises a first coolant passage 6 disposed between an upper outlet 5 of the water jackets 4 and an upper inlet 12 of a radiator 11, and a second coolant passage 14 provided between a lower outlet 13 of the radiator 11 and a lower inlet 10 of the water jackets 4, including a thermostat cap 16, a thermostat housing 8 and a water pump 9. A bypass passage 7 is provided between a junction J of the first passage 6 and the housing 8 so as to communicate the first passage 6 with the second passage 14 without passing the radiator 11. The thermostat 1 is secured to the housing 8 by the thermostat cap 16. The thermostat 1 has a main valve 3 for closing the second passage 14 and a bypass valve 2 for closing a bypass port of the bypass passage 7.

In Fig. 1, the reference A' designates a measuring point for measuring the temperature of the coolant in the housing 8, and B' designates a measuring point provided in the second passage 14 adjacent to the thermostat cap 16 and upstream of the thermostat 1 for measuring the temperature of the coolant in the second passage 14. The reference C designates a measuring point for measuring the flow rate of the coolant in the second passage 14.

A pipe used for each of the first and second coolant passages 6 and 14 is of 24 mm diameter, and a pipe used for the bypass passage 7 is of 10 mm diameter. When the main valve 3 is opened, the flow rate of the coolant at the point C passing through the radiator 11 is 60 liters per minute.

During the engine is warmed up, the main valve 3 of the thermostat 1 is closed, while the bypass valve 2 integrated with the main valve 3 is fully opened. Thus, the coolant drawn from the outlet 5 of the water jackets 4 does not pass through the radiator 11. The coolant is circulated by the water pump 9 through the junction J of the first passage 6, bypass passage 7, housing 8, and inlet 10 of the water jackets 4 as indicated by arrows. Thus, the temperature of the coolant in the housing 8 quickly rises.

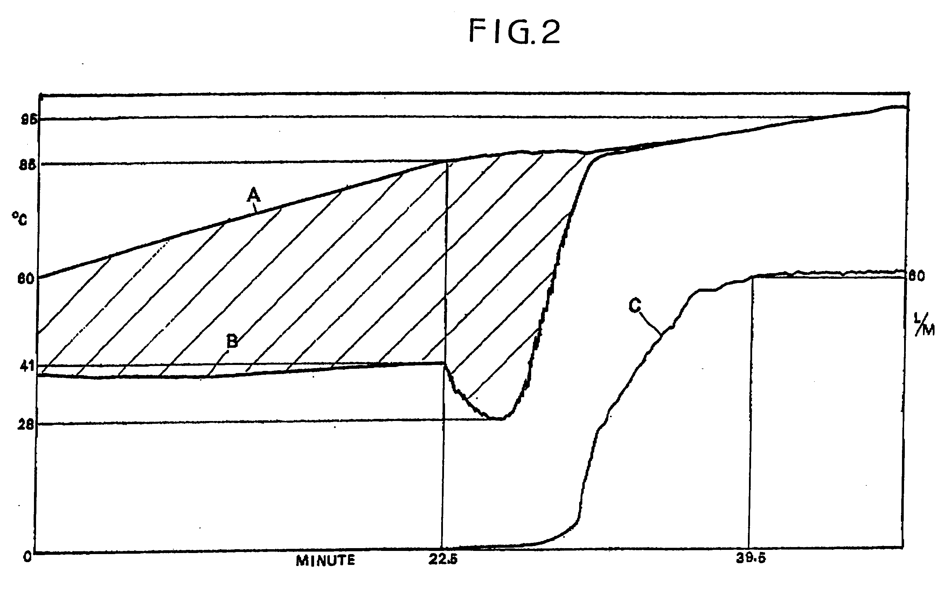

Before the engine starts, a difference between the temperature A of the coolant at the point A' in the housing 8 and the temperature B of the coolant at the point B' in the passage 14 is zero. However, after the engine starts, since the coolant in the radiator 11 and the thermostat cap 16 is not circulated, the temperature rising rate of the coolant temperature B therein is slow. Therefore, as shown in a record of Fig. 2, after the engine starts, the difference between the temperatures A and B becomes 20°C at a time when the temperature A becomes 60°C. Thereafter, the difference more increases. Even if temperature A at the point A' becomes 85°C which is an opening temperature of the main valve 3, temperature B at the point B' is 41°C. There is a difference of 44°C between the temperatures A and B.

When the main valve 3 of the thermostat 1 opens, the coolant of a low temperature is drawn from the lower outlet 13 of the radiator 11 and fed to the thermostat housing 8 through the second passage 14. Consequently, the temperature B of the coolant at the point B' is further lowered by 13°C. As a result, the difference between the temperature B of the coolant in the passage 14 and the temperature A of the coolant in the housing 8 becomes 57°C at maximum.

Since the heat sensitivity of the thermostat 1 is low, the response of the thermostat delays with respect to the change of the coolant temperature. Therefore, the main valve 3 opens after the temperature has become higher than a predetermined opening temperature. When the main valve 3 opens, the temperature of the coolant is lowered. The main valve 3 closes after the coolant temperature has considerably decreased lower than a predetermined closing temperature. Then, the coolant temperature rises. Namely, there is a large heat overshoot in control of the coolant temperature, so that the main valve is repeatedly opened and closed. When the main valve 3 closes, a surge pressure occurs at the upstream of the main valve.

The heat overshoot causes cracks of the cylinder block and cylinder head of the engine, and the surge pressure causes breakdown of the thermostat 1 and the radiator 11. The fluctuation of the hydraulic pressure causes overload on the water pump 9, which will shorten the life of the pump. Furthermore, an abnormally low temperature of the coolant at the opening of the main valve affects combustion condition in cylinders, thereby deteriorating the emission control and increasing fuel consumption of the engine.

These troubles are mainly caused by a large difference between the coolant temperatures A and B, because of closing the main valve for the purpose of quick warming up of the engine.

### SUMMARY OF THE INVENTION

An object of the present invention is to provide a thermostat for an automotive engine cooling system which may reduce the difference between coolant temperatures in the cooling system, thereby solving the above described problems.

In a cooling system of the present invention, a flange of a thermostat secured to a thermostat housing has at least one hole. When a main valve is closed in cold engine, a very small amount of coolant is circulated passing through a radiator and the hole.

According to the present invention, there is provided a cooling system for an automotive engine, having a water jacket, a radiator, a passage for coolant, the passage including a first passage provided between an outlet of the water jacket and an inlet of the radiator, and a second passage provided between an outlet of the radiator and an inlet of the water jacket, a bypass passage provided between the first passage and the second passage, a water pump provided in the second passage for circulating the coolant in the system, a thermostat having a main valve provided in the second passage and a bypass valve provided in the bypass passage, and a housing for the thermostat.

A flange is provided for supporting the thermostat in the housing and for closing the passage. The flange has at least one hole having a diameter between 1.8 mm and 2.8 mm.

In an embodiment of the present invention, the flange is provided in the second passage.

These and other objects and features of the present invention will become more apparent from the following detailed description with reference to the accompanying drawings.

### BRIEF DESCRIPTION OF DRAWINGS

Fig. 1 is a schematic diagram of a conventional cooling system for an automotive engine;
Fig. 2 shows a record showing changes of temperature and flow rate of the coolant of the conventional system with respect to time;
Fig. 3a is a side view of a thermostat of the present invention;
Fig. 3b is a sectional side view of the thermostat;
Fig. 4 is a schematic diagram showing a cooling system for an automotive engine according to the present invention;
Fig. 5 shows a record showing changes of temperature and flow rate of the coolant with respect to the time;
Fig. 6 shows a record of a second embodiment;
Fig. 7 is a schematic diagram showing a third embodiment of the present invention; and
Fig. 8 shows a fourth embodiment of the present invention.

### DETAILED DESCRIPTION OF THE PREFERRED EMBODIMENTS

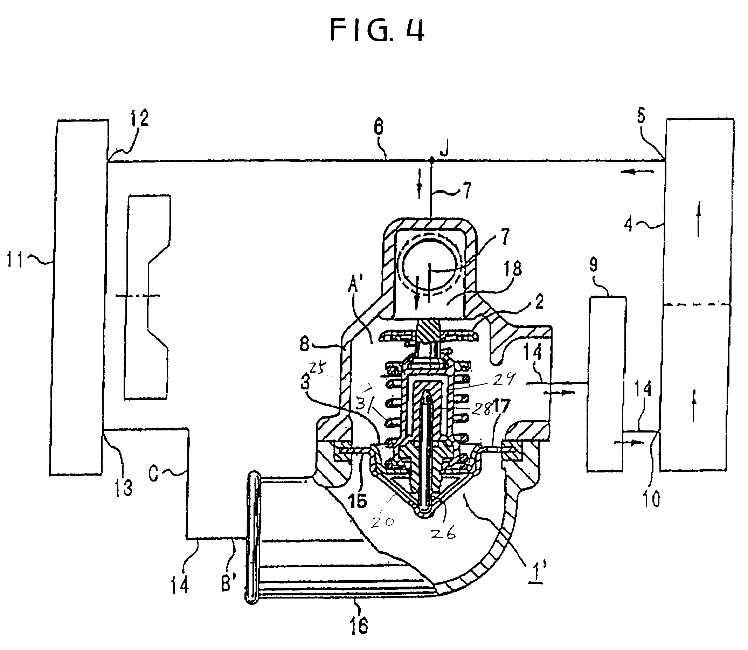

Referring to Fig. 4 showing a cooling system for an automotive engine of the present invention, parts of the system which are the same as the conventional cooling system of Fig. 1 are identified with the same reference numerals as Fig. 1.

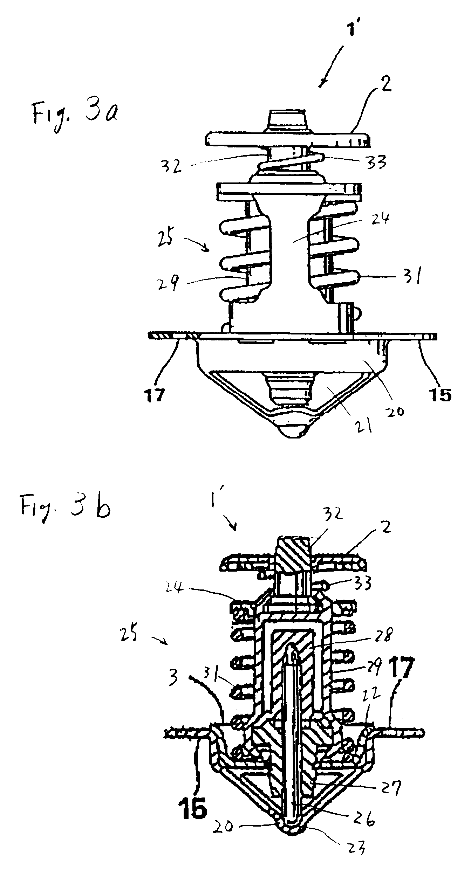

Figs. 3a and 3b show a thermostat 1' of the present invention disposed in the downward position.

The thermostat 1' has a housing 20, a flange 15 to be secured to the thermostat housing 8, a thermo-actuator 25, and a frame 24 secured to the flange 15. The housing 20 has openings 21 for the coolant and a valve seat 22. The flange 15 has a hole 17 having a diameter for communicating the space in the thermostat housing 8 with the passage in the thermostat cap 16. The diameter of the hole 17 is determined to a value so that the coolant passes the hole at such a flow rate that the temperature B increases approximately in parallel with the temperature A without reducing the rising rate of the temperature A.

In the embodiment, the diameter of the hole is 2.8 mm.

The thermo-actuator 25 comprises an actuating steel rod 26, a guide member 27 slidably mounted on the rod 26, and a resilient seal bag 28 which is watertightly secured to the guide member 27. The seal bag 28 is inserted in a heat conductive cylinder 29 filled with wax pellet. An end of the cylinder 29 is securely engaged with the guide member 27, thereby forming the thermo-actuator 25.

The rod 26 of the thermo-actuator is secured to the housing 20 at a top portion 23, and the main valve 3 is secured to the guide member 27. A return coil spring 31 disposed surrounding the cylinder 29 is provided between the main valve 3 and the bottom of the frame 24. The bypass valve 2 is slidably mounted on a shaft 32 secured to the cylinder 29 and resiliently held on the shaft 32 by a spiral spring 33.

Fig. 4 shows the main valve in the close state. When the temperature of the coolant rises in excess of a predetermined value of the thermostat, the wax in the heat conductive cylinder 29 expands. This forces the seal bag 28 against the rod 26. Since the rod 26 is secured to the housing 20, the cylinder 29 is upwardly moved against the force of the spring 31, thereby opening the main valve 3.

When the coolant temperature decreases, the wax contracts. Thus, the coil spring 31 causes the main valve 3 to move to the closed position.

When the main valve 3 of the thermostat 1' is closed during the engine is warmed up, the coolant is circulated by the water pump 9 through the junction J of the first passage 6, bypass passage 7, housing 8, and water jackets 4. In the system, since the hole 17 is formed in the flange 15 of the thermostat 1', a very small amount of the coolant is circulated passing through radiator 11, second passage 14, thermostat cap 16 and housing 8 through the hole 17 of the flange 15.

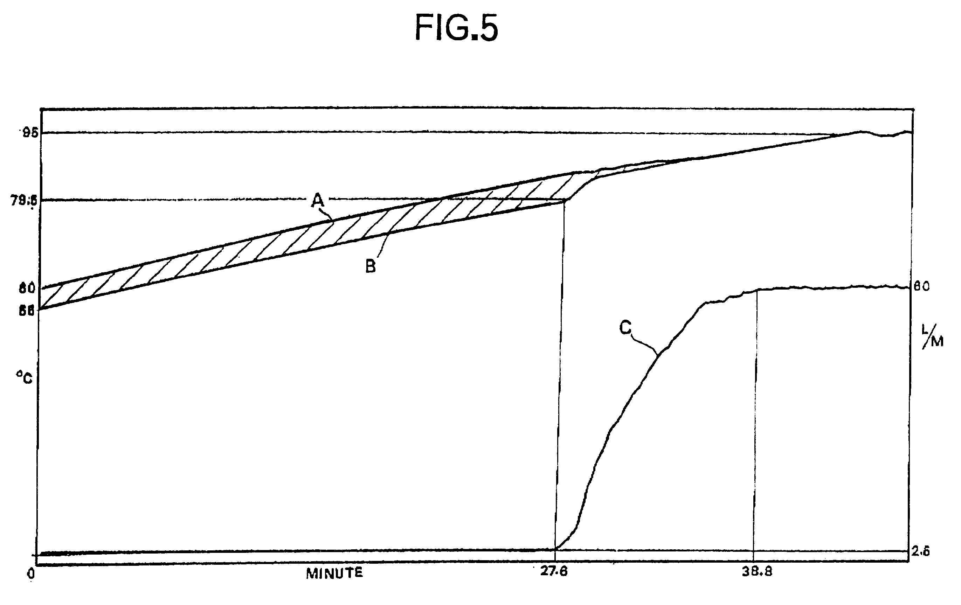

Fig. 5 shows a record of the cooling system of Fig. 4. Before the engine starts, the difference between the coolant temperatures A and B is zero (not shown). After the engine starts, the temperature A in the record at a time is 60°C and the temperature B is 55°C. When the main valve 3 becomes valve open starting temperature 85°C, the temperature B is 79.5°C. When the main valve 3 is fully opened, the temperature difference is reduced to 6°C. Since the temperature difference is small, there is no heat overshoot and pressure fluctuation. Thus, the devices of the system are prevented from suffering.

The flow rate of the coolant passing through the radiator 11 and the point C is 2.5 liters per minute until the main valve opens.

The time until the main valve 3 opens from the starting point of the temperature A at 60°C shown in the conventional record of Fig. 2 is about 22.5 minutes, and that of Fig. 5 is about 27. 6 minutes. Therefore, the time of the conventional system is shorter by 5.1 minutes than that of the embodiment of Fig. 5. On the other hand, the time until the flow rate reaches 60 liters per minute shown in the record of Fig. 2 is 39.5 minutes, and that of Fig. 5 is 38.8 minutes. Thus, the time shown in Fig. 5 is shorter by 0.7 minutes than that shown in Fig. 2.

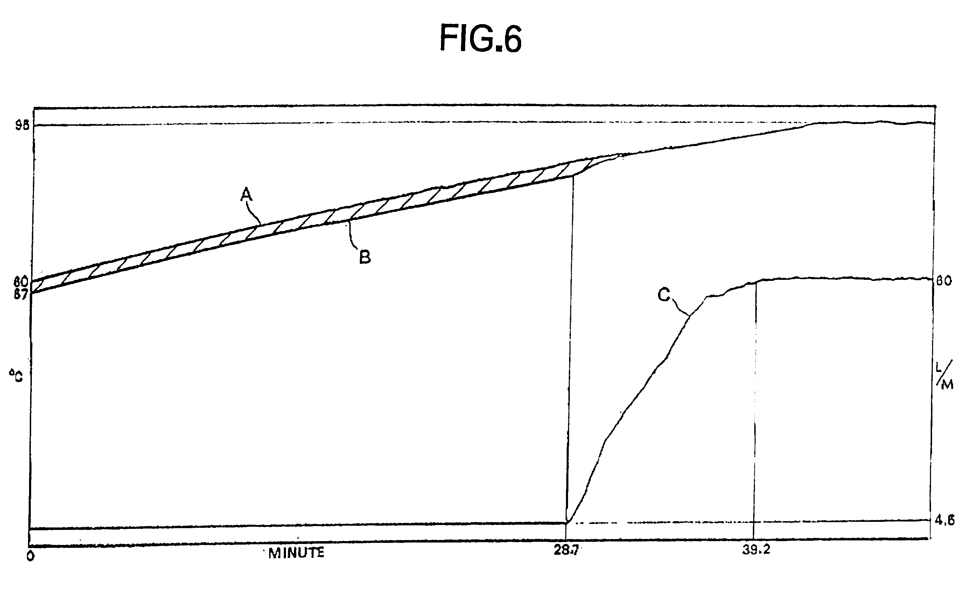

Fig. 6 shows a record of a second embodiment in which the flange of the thermostat has two communicating holes each having the diameter of 2.8 mm which is the same as the first embodiment.

The temperature difference in the valve opening state is 3.5°C. The coolant temperature B becomes the same as the coolant temperature A when valve opening and rises together thereafter. The time until the flow rate reaches 60 liters per minute shown in the record of Fig. 6 is 39.2 minutes. Thus, the time of this embodiment is shorter by 0.3 minutes than that of Fig. 2.

As shown in Fig. 2, the temperature A rises at a constant rate, while the increase of temperature B is sluggish. Accordingly, the temperature difference in the conventional system becomes maximum when the main valve is opened. Thereafter, the temperature difference is further increased because of the mixing of the coolant of low temperature. Thus, heat overshoot and serge pressure occur cyclically, while the increase of temperature A stops. Therefore, the opening rate of the main valve stops. Thereafter, the valve is further opened to increase the flow rate of coolant. Thus, the temperature B quickly rises to the same as the temperature A. The temperatures A and B rise together.

In Fig. 2, the hatched area defined by the lines of temperatures A and B represents a waste of energy which causes aforementioned disadvantages. The hatched area shown in Fig. 6 is epoch-making and economical on energy

If the number of holes formed in the flange is increased, for example three, waste of energy is further reduced. The diameter of 2.8 mm can be changeable. Preferable diameter of one hole is between 1.8 mm and 2.8 mm.

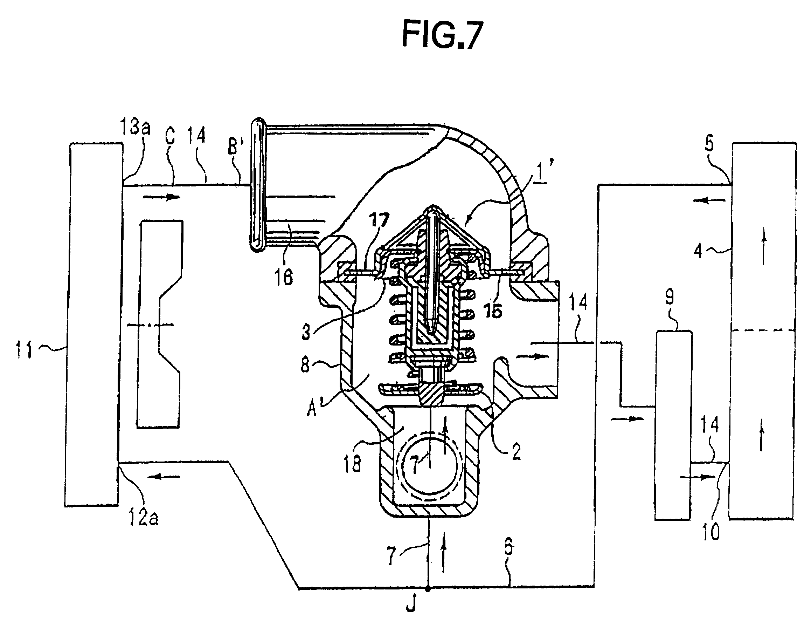

Fig. 7 shows a third embodiment of the present invention. In the cooling system of the third embodiment, the thermostat 1' is disposed in the upward position. The flange 15 having the hole 17 is secured to the housing 8. The first passage 6 is provided to communicate the outlet 5 of the water jackets 4 with a lower inlet 12a of the radiator 11. The second passage 14 is provided to communicate an upper outlet 13a of the radiator 11 with the thermostat cap 16. Namely, the cooling system has an X-crossing passage arrangement.

During the warming up of the engine, when the main valve 3 is closed, a very small amount of coolant is circulated passing through the radiator 11, second passage 14, thermostat cap 16 and the hole 17.

In the cooling system, although the coolant flows in the radiator 11 at a very small rate during the warming up of the engine, the high temperature coolant in the water jackets 4 is directly introduced in the lower inlet 12a. Therefore, the heat of the coolant in the first passage 6 is transmitted to the coolant in the radiator 11 by the conduction and convection. Thus, the thermal efficiency is more improved than the previous embodiments. Since the thermostat cap 16 is disposed on an upper portion of the engine, the thermostat is easily detachable.

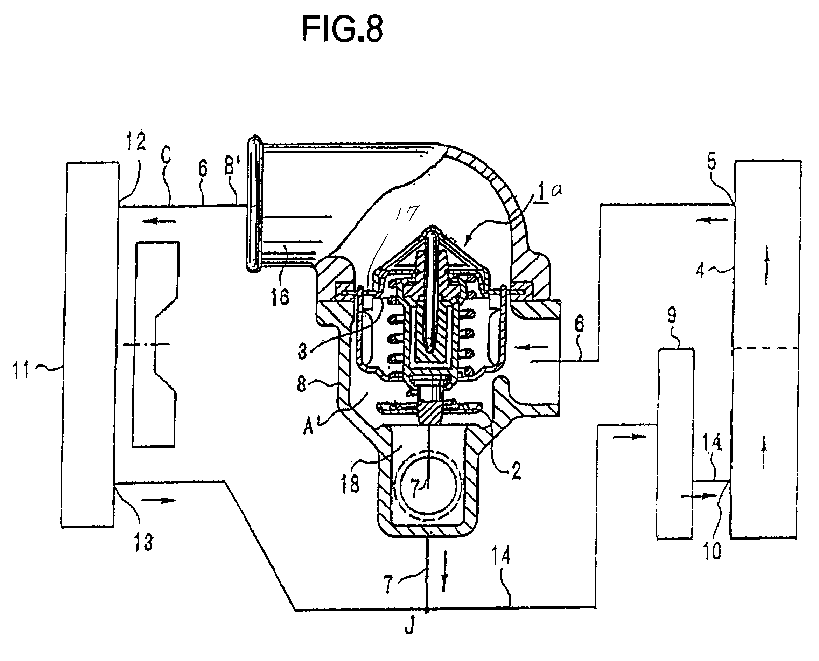

Fig. 8 shows a fourth embodiment of the cooling system where a thermostat 1a is disposed in a coolant discharge passage of the water jackets in the upward position.

The cooling system comprises the first coolant passage 6 disposed between the upper outlet 5 of the water jackets 4 and the upper inlet 12 of the radiator 11, including the thermostat housing 8 and the thermostat cap 16, and the second coolant passage 14 provided between the lower outlet 13 of the radiator 11 and the lower inlet 10 of the water jackets 4 passing through the water pump 9. The bypass passage 7 is provided between the bypass port 18 and the junction J of the second passage 14. The flange 15 having the hole 17 is secured to the housing 8.

When the main valve 3 is closed, a very small amount of coolant is circulated to the radiator 11 through the hole 17 so as to increase the coolant temperature in the second passage. When the main valve is opened, the coolant of low temperature in the water jackets 4 is prevented from introducing to the radiator 11 in which coolant temperature is high.

In the embodiment, the same effect as the previous embodiments is obtained.

In accordance with the present invention, a communicating hole is formed in the flange of the thermostat so that the difference between the temperatures in the thermostat housing and the second coolant passage in the valve opening state becomes very small. Therefore, heat overshoot and serge pressure can be prevented. Thus, cracks of cylinder block and cylinder head does not occur, and the lives of the thermostat, radiator and water pump are extended. The cooling system of the present invention is effective to complete the combustion in the engine, thereby reducing emission and fuel consumption.

While the invention has been described in conjunction with preferred specific embodiments thereof, it will be understood that these descriptions are intended to illustrate and not limit the scope of the invention, which is defined by the following claims.

## Claims

1. A cooling system for an automotive engine, having a water jacket, a radiator, a passage for coolant, the passage including a first passage provided between an outlet of the water jacket and an inlet of the radiator, and a second passage provided between an outlet of the radiator and an inlet of the water jacket, a bypass passage provided between the first passage and the second passage, a water pump provided in the second passage for circulating the coolant in the system, a thermostat having a main valve provided in the second passage and a bypass valve provided in the bypass passage, and a housing for the thermostat,
the cooling system comprising:
a flange supporting the thermostat in the housing and for closing said passage,
the flange having at least one hole for passing the coolant.

2. The system according to claim 1 wherein the diameter of the hole has a value to allow a part of the coolant to flow passing through the radiator so that temperature of the part of the coolant increases with the coolant passing through the bypass valve.

3. The system according to claim 1 wherein the flange is provided in the second passage.

4. The system according to claim 1 wherein the flange is provided in the first passage.

5. The system according to claim 2 wherein the hole has a diameter between 1.8 mm and 2.8 mm.
